(19) Europäisches Patentamt
European Patent Office
Office européen des brevets

(11) EP 1 101 786 A1

(12) EUROPEAN PATENT APPLICATION

(43) Date of publication:
23.05.2001 Bulletin 2001/21

(51) Int Cl.[7]: C08G 77/04, C08G 77/38

(21) Application number: 00309988.4

(22) Date of filing: 10.11.2000

(84) Designated Contracting States:
AT BE CH CY DE DK ES FI FR GB GR IE IT LI LU MC NL PT SE TR
Designated Extension States:
AL LT LV MK RO SI

(30) Priority: 22.11.1999 US 447117

(71) Applicant: GENERAL ELECTRIC COMPANY
Schenectady, NY 12345 (US)

(72) Inventor: Perry, Robert J.
Niskayuna, New York 12309 (US)

(74) Representative: Szary, Anne Catherine, Dr. et al
GE London Patent Operation,
Essex House,
12-13 Essex Street
London WC2R 3AA (GB)

# (54) Process for the preparation of silicone fluids

(57) A process for making silicone fluid includes contacting a silylhydride-functional silicone fluid with one or more alkyl olefins and aryl olefins under hydrosilylation conditions in the substantial absence of a hydrocarbon solvent.

EP 1 101 786 A1

## Description

The present invention is directed to a process for preparing a silicone fluid, more specifically, to a process for preparing alkyl and aryl substituted silicone fluids in the substantial absence of hydrocarbon solvents.

Aryl alkyl silicone fluids are used as release agents, for example, in aluminum die cast mold applications. Such materials are often made via hydrosilylation of the appropriate olefins with a silicone hydride fluid in a suitable hydrocarbon solvent. Such solvents serve to dissolve the reagents, lower the viscosity of the reaction mixture and aid in controlling the reaction temperature.

Typical hydrocarbon solvents include alkanes, such as, for example, hexane, and aromatic hydrocarbons, such as, for example, toluene and xylene. However, the use of hydrocarbons has several drawbacks. Losses of and waste hydrocarbon solvent pose an environmental concern. The use of hydrocarbon solvents may, in some cases, present a safety concern with respect to fire and explosions. Reactions run in solvent require larger reactors for a given amount of product, due to the space required by the solvent. Complete removal of hydrocarbon solvents is difficult and detectable levels of hydrocarbons can be found in the finished silicone fluid products. Furthermore, the hydrocarbons may contaminate other materials made in the same reaction vessels.

### SUMMARY OF THE INVENTION

The present invention provides a process for making a silicone fluid, comprising contacting a silylhydride-functional silicone fluid with one or more compounds selected from aryl olefins and alkyl olefins under hydrosilylation conditions in the substantial absence of hydrocarbon solvent.

The process of the present invention allows the synthesis of alkyl and aryl substituted silicone fluids in the absence or substantial absence of hydrocarbon solvents and thereby avoids the above-noted drawbacks of such solvents.

### DETAILED DESCRIPTION OF THE INVENTION

As used herein the terminology "substantial absence" means less than or equal to 1.0 parts by weight ("pbw"), more preferably less than or equal to 0.1 pbw aromatic hydrocarbon solvent per 100 pbw reaction mixture. Most preferably, no detectable amount of hydrocarbon solvent is present in the reaction mixture.

As used herein, the terminology " hydrocarbon solvent" includes alkanes, such as, for example, straight chain or branched ($C_5$-$C_{20}$)alkanes, and aromatic hydrocarbon solvents, such as, for example, benzene, toluene, xylene, mesitylene. As used herein, the terminology "($C_x$-$C_y$)" in reference to an organic compound or substituent group, wherein x and y are each positive integers, means that such compound contains from x to y carbon atoms per molecule or that such substituent group contains form x to y carbon atoms per group.

In a preferred embodiment, the silylhydride functional silicone comprises one or more polysiloxane polymers or copolymers, each containing at least one silylhydride group per molecule, more preferably containing greater than 2 silylhydride groups per molecule, and having a viscosity of from about 2 centiStokes ("cstk") to about 10,000 cstk, preferably from about 5 cstk to about 1,000 cstk and even more preferably from about 10 cstk to 100 cstk.

In a preferred embodiment, the silylhydride functional silicone comprises one or more polysiloxane polymers or copolymers containing structural units of the structural formula (I):

$$R_aSiO_{4-a/2} \qquad (I)$$

wherein each R is independently H or a monovalent hydrocarbon radical, provided that at least one R substituent per molecule of the silylhydride functional silicone is H, and a is from 0 to 3.

Suitable monovalent hydrocarbon radicals include monovalent acyclic hydrocarbon radicals, monovalent alicyclic hydrocarbon radicals and monovalent aromatic hydrocarbon radicals.

As used herein, the terminology "monovalent acyclic hydrocarbon radical" means a monovalent straight chain or branched hydrocarbon radical, preferably containing from 1 to 20 carbon atoms per radical, which may be saturated or unsaturated. Suitable monovalent acyclic hydrocarbon radicals include, for example, alkyl radicals, such as, for example, methyl, ethyl, secbutyl, tert-butyl, octyl, dodecyl, stearyl and eicosyl, alkenyl radicals, such as, for example, ethenyl and propenyl, and alkynyl radicals, such as, for example, propynyl and butynyl.

As used herein, the terminology "alicyclic hydrocarbon radical" means a radical containing one or more saturated hydrocarbon rings, preferably containing from 6 to 10 carbon atoms per ring, per radical which may optionally be substituted on one or more of the rings with one or more alkyl groups, each preferably containing from 2 to 6 carbon

atoms per group and which, in the case of two or more rings, may be fused rings. Suitable monovalent alicyclic hydrocarbon radicals include, for example, cyclohexyl and cyclooctyl.

As used herein, the terminology "monocyclic aromatic hydrocarbon radical" means a hydrocarbon radical containing one aromatic ring per radical, which may optionally be substituted on the aromatic ring with one or more alkyl groups, each preferably containing from 2 to 6 carbon atoms per group. Suitable monovalent aromatic hydrocarbon radicals include, for example, phenyl, tolyl, xylyl, 2,4,6-trimethylphenyl and naphthyl.

In a more highly preferred embodiment, the silylhydride functional silicone of the present invention comprises one or more polymers or copolymers according to structural formula (II):

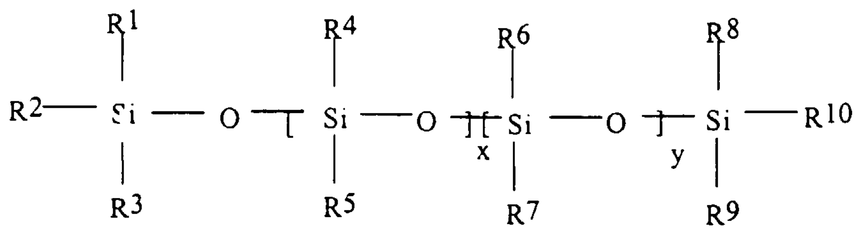

(II)

wherein:

$R^1$, $R^2$, $R^3$, $R^4$, $R^5$, $R^6$, $R^7$, $R^8$, $R^9$, $R^{10}$ are each independently H or a monovalent hydrocarbon radical, provided that at least one of $R^1$, $R^2$, $R^3$, $R^4$, $R^5$, $R^6$, $R^7$, $R^8$, $R^9$, $R^{10}$ is H, and

$0 \leq x \leq 500$ and $0 \leq y \leq 500$.

In a preferred embodiment, $R^1$, $R^3$, $R^4$, $R^5$, $R^6$, $R^8$, $R^{10}$ are each independently $(C_1\text{-}C_{18})$alkyl or $(C_6\text{-}C_{10})$aryl and $R^2$, $R^9$ are each H, independently $(C_1\text{-}C_{18})$alkyl or $(C_6\text{-}C_{10})$aryl, and $R^7$ is H. In a more highly preferred embodiment, $R^1$, $R^3$, $R^4$, $R^5$, $R^6$, $R^8$, $R^{10}$ are each methyl and $R^2$, $R^7$, $R^9$ are each H. In an alternative highly preferred embodiment, $R^1$, $R^2$, $R^3$, $R^4$, $R^5$, $R^6$, $R^8$, $R^9$, $R^{10}$ are each methyl and $R^7$ is H. In a preferred embodiment, $0 \leq x \leq 250$ and $1 \leq y \leq 100$.

The aryl olefin may be any hydrocarbon compound containing at least one site of α, β ethylenic unsaturation per molecule and containing at least one aromatic ring per molecule.

In a preferred embodiment, the aryl olefin used in the present comprises one or more compounds according to the structural formula (III):

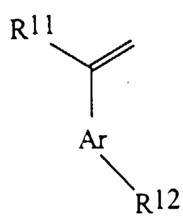

(III)

wherein:

Ar is a divalent $(C_6\text{-}C_{10})$aromatic radical,

$R^{11}$ is H, halo or alkyl, and

$R^{12}$ is monovalent hydrocarbon radical.

As used herein, "divalent $(C_6\text{-}C_{10})$aromatic radical" means a divalent hydrocarbon radical containing one or more aromatic rings per radical, which may optionally be substituted on the one or more aromatic rings with one or

more alkyl groups, each preferably containing from 2 to 6 carbon atoms per group and which, in the case of two or more rings, may be fused rings, such as, for example, 1,2-phenylene, 1,3-phenylene, 1,4-phenylene, 4-methyl-1,2-phenylene, 2,4,6-trimethyl-1,3-phenylene and 2,3-naphthylene.

In a preferred embodiment, Ar is 1,2-phenylene, 1,3-phenylene or 1,4-phenylene. In a preferred embodiment, $R^{11}$ is alkyl, more preferably $(C_1-C_6)$alkyl, and, even more preferably, methyl.

In a preferred embodiment, $R^{12}$ is H, hydroxyl, alkyl, haloalkyl, aminoalkyl, amidoalkyl, cyanoalkyl, more preferably H or $(C_1-C_6)$alkyl.

In a preferred embodiment, the aryl olefin comprises styrene or $\alpha$-methyl styrene.

The alkyl olefin may be any alkenyl, preferably a $(C_3-C_{38})$alkenyl, compound having at least one site of $\alpha,\beta$ ethylenic unsaturation per molecule.

In a preferred embodiment, the alkyl olefin used in the present comprises one or more compounds according to the structural formula (III):

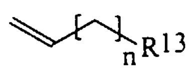

(III)

wherein:

$R^{13}$ is H or alkyl, and

$0 \leq n \leq 36$.

In a preferred embodiment, $R^{13}$ is H.

In a preferred embodiment, $n \geq 1$, more preferably, $1 \leq n \leq 20$.

In a preferred embodiment, the alkyl olefin comprises hexene, heptene, octene, decene, or dodecene.

The silylhydride functional siloxane may be contacted with an alkyl olefin to form an alkyl substituted silicone polymer, contacted with aryl olefin to form an aryl substituted silicone polymer or contacted with an aryl olefin and an alkyl olefin to form an aryl alkyl substituted silicone polymer. If both an aryl olefin and an alkyl olefin are used, the silylhydride functional siloxane may be sequentially contacted with the aryl olefin and the alkyl olefin or simultaneously contacted with the aryl olefin and the alkyl olefin

In a preferred embodiment, the hydrosilylation reaction is conducted in a dry inert atmosphere, such as, for example under a blanket of dry $N_2$ or using a purge of dry $N_2$.

In a preferred embodiment, the hydrosilylation reaction is conducted at a controlled temperature of from about 25°C to about 200°C, more preferably from about 60°C to about 150°C and even more preferably from about 75°C to about 135°C, in the presence of an effective amount of hydrosilylation catalyst. Suitable hydrosilylation catalysts, such as, for example, Platinum, Palladium, Rhodium, Ruthenium and their complexes, are know. In a preferred embodiment, the hydrosilylation catalyst is Ashby's catalyst, Karstedt's catalyst, chloroplatinic acid, Platinum on alumina, Palladium on carbon, tris(triphenylphosphine) rhodium chloride, and tris(triphenylphosphine) carbonyl rhodium hydride.

In a preferred embodiment, for given total charges of the silylhydride functional silicone fluid, alkyl olefin, aryl olefin and a catalyst, at least a portion of the silylhydride functional silicone fluid charge and a portion of the alkyl olefin or aryl olefin charge are mixed in a reaction vessel and heated, a portion of the hydrosilylation catalyst charge is then added to the heated contents of the reaction vessel and streams of the remaining portions of the silylhydride functional silicone fluid, alkyl olefin, aryl olefin and catalyst charges are then fed into the reaction vessel at rates selected to maintain the temperature of the contents of the reaction vessel within a desired range.

In a highly preferred embodiment, the silylhydride-functional silicone fluid and a portion, preferably about 5 to 10 percent by weight ("wt%") of the total olefin charge, of the alkyl olefin are charged to the reaction vessel and brought to the reaction temperature. Once the siloxane and olefin mixture reaches the reaction temperature, a portion, preferably, from about 5 wt% to about 10 wt% of the total catalyst charge, of the hydrosilylation catalyst is charged to the reaction vessel.

In a preferred embodiment, the olefins are then continuously fed to the reaction vessel at controlled rates selected to maintain the temperature of the contents of the reaction vessel within the desired hydrosilylation reaction temperature range. The remaining catalyst is periodically added to the reaction vessel in discrete portions, or, more preferably, is dissolved or dispersed in one of the olefins and continuously fed into the reaction vessel with the olefin stream.

In a preferred embodiment the remaining aromatic olefin and a portion of the remaining catalyst are fed to

the reaction vessel. The contents of the reaction vessel are maintained at hydrosilylation reaction temperature for a period of time, typically about 1 hour, sufficient to allow reaction of the aromatic olefin with the siloxane. The remaining alkyl olefin and remaining catalyst are then fed to the reaction vessel. The contents of the reaction vessel are maintained at hydrosilylation reaction temperature for a period of time, typically about 1 hour, sufficient to allow reaction of the alkyl olefin with the siloxane.

The silicone fluid product may, optionally be stripped to remove volatile impurities. In a preferred embodiment, the silicone fluid product is stripped at a pressure of from about 0.1 millimeters of Mercury ("mm Hg") to about 100 mm Hg, more preferably from about 1 mm Hg to about 50 mm Hg, even more preferably from about 5 mm Hg to about 20 mm Hg, at a temperature of from about 50°C to about 200°C, more preferably from about 100°C to about 175°C, even more preferably from about 125°C to about 150°C.

The silicone fluid product may, optionally, be filtered to remove solid impurities, using for example a conventional cartridge filter.

In a preferred embodiment, the silicone fluid product exhibits a viscosity of from about 5 cstk to about 100,000 cstk, more preferably from about 100 to about 10,000 cstk and most preferably from about 800 to about 5,000 cstk.

In a preferred embodiment, the amount of hydrocarbon solvent, if any, present in the silicone fluid silicone fluid product of the process of the present invention is, based on the total amount of silicone fluid product, less than 100 parts per million, ("ppm"), more preferably, less than 50 ppm and still more preferably, less than 20 ppm. Most preferably, no detectable amount of amount of aromatic hydrocarbon solvent is present in the silicone fluid product of the process of the present invention.

The silicone fluid made by the process of the present invention is useful as, for example, mold release agents.

Example 1

A hydride functional siloxane (according to the formula $MD^{H}{}_{x}M$, with M = $(CH_3)_3SiO_{1/2}$ $D^H$ = $CH3HSiO_{2/2}$ and x such that the siloxane exhibited a viscosity of about 30 cstk, 333 g) and an aryl olefin (α-methyl styrene, 14 g) were added to a reaction vessel and heated to 90°C. A platinum catalyst (0.04g of a solution containing 0.005% Pt) was then added to the reaction vessel. The reaction mixture exothermed and addition of the remainder of the aryl olefin (α-methyl styrene, 273 g) commenced. The aryl olefin was added over 1 hour with 2 additions (0.31 g each) of catalyst, one after 1/3 of total alpha methyl styrene had been added and the second after 2/3 of the total alpha methyl styrene had been added. The reaction temperature was kept below 130 °C by careful control of the α-methyl styrene addition. The reaction mixture was allowed to stir for ½ hour then an alkyl olefin (1-hexene, 264 g) was added in a controlled fashion over 80 minutes. Again, an exotherm occurred but was controlled by the rate of addition with the temperature never exceeding 130 °C. The product was tested for residual hydride and stripped to remove volatiles to give an aryl alkyl silicone product having a viscosity of 1707 cstk, a specific gravity of 0.986 and a toluene content of less than of less than 10 ppm (less than limit of detection method).

Example 2

A silylhydride functional siloxane (the silylhydride functional siloxane used in Example 1, 57.1 g) was charged to a reaction vessel and heated to 105 °C. A solution of an aryl olefin (α-methyl styrene, 48 g) and platinum catalyst (0.14g of a solution containing 0.005% Pt) was then added to the reaction vessel at controlled rate over 25 minutes. The reaction mixture exothermed and was allowed to react for ½ hour after the addition of the olefin was completed. An alkyl olefin (1-hexene, 52.6 g) was then added to the reaction vessel over 1 hour and allowed to react for ½ hour after the addition of the alkyl olefin was completed. The product mixture had low levels of hydride and was stripped to remove volatiles to give an aryl alkyl silicone product with a viscosity of 1797 cstk.

Comparative Example C1

A silylhydride functional siloxane (the silylhydride functional siloxane used in Example 1, 38.5 parts) was charged to the reactor and diluted with 23.1 parts toluene. An aryl olefin (α-methyl styrene, 3.8 parts) was then added to the reaction vessel and heated to 105 °C under 250 mm Hg vacuum. After distilling off any water and a small amount of toluene, platinum catalyst (0.035 parts) was added and aryl olefin (α-methyl styrene, 35 parts) addition began in a controlled fashion. The reaction mixture exothermed and was allowed to stir until completion. An alkyl olefin (1-hexene, 30.3 parts) was then added to the reaction vessel and allowed to react within the temperature range of 120 °C 135 °C. When the hydride analysis was less than 0.25%, the reaction mixture was stripped of toluene and any excess hexene and filtered to remove haze to give final product. The final product exhibited a viscosity of 1725 cstk and a toluene content of 2,135 ppm.

The process of the present invention avoids the drawbacks, for example, environmental, safety, efficiency

and contamination concerns, associated with use of hydrocarbon solvents.

**Claims**

1. A process for making silicone fluid, comprising contacting a silylhydride-functional silicone fluid with one or more compounds selected from aryl olefins and alkyl olefins under hydrosilylation conditions in the substantial absence of hydrocarbon solvent.

2. The process of claim 1, wherein the silylhydride-functional silicone fluid comprises one or more polysiloxane polymers or copolymers, each containing at least one silylhydride group per molecule, more preferably containing greater than 2 silylhydride groups per molecule, and having a viscosity of from about 2 centiStokes ("cstk") to about 10,000 cstk

3. The process of claim 1, wherein the silylhydride-functional silicone fluid comprises one or more polymers or copolymers, containing structural units of the structural formula: $R_aSiO_{4-a/2}$, wherein each R is independently H or a monovalent hydrocarbon radical, provided that at least one R substituent per molecule of the silylhydride functional silicone is H, and a is from 0 to 3.

4. The process of claim 1, wherein the silylhydride-functional silicone fluid comprises one or more polymer or copolymers according to structural formula:

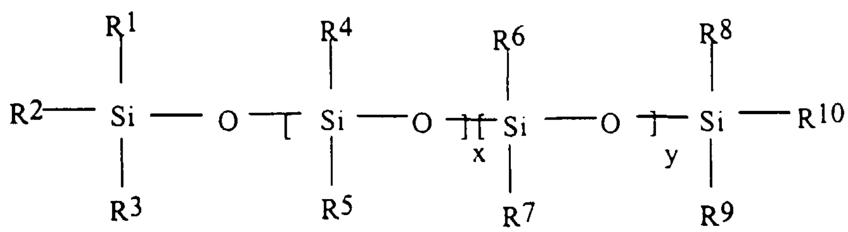

wherein:

$R^1$, $R^2$, $R^3$, $R^4$, $R^5$, $R^6$, $R^7$, $R^8$, $R^9$, $R^{10}$ are each independently H or a monovalent hydrocarbon radical, provided that at least one of $R^1$, $R^2$, $R^3$, $R^4$, $R^5$, $R^6$, $R^7$, $R^8$, $R^9$, $R^{10}$ is H;

$0 \leq x \leq 500$ and $0 \leq y \leq 500$.

5. The process of claim 1, wherein the aryl olefin comprises one or more compounds according to the structural formula:

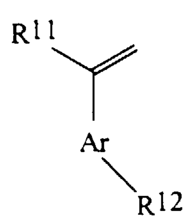

wherein Ar is a divalent ($C_6$-$C_{10}$) aromatic radical, $R^{11}$ is H or alkyl, and $R^{12}$ is to monovalent hydrocarbon radical.

6. The process of claim 1, wherein the silylhydride functional siloxane is contacted with

(a) an alkyl olefin to form an alkyl substituted silicone polymer, or
(b) an aryl olefin to form an aryl substituted silicone polymer, or
(c) an aryl olefin and an alkyl olefin to form an aryl alkyl substituted silicone polymer, wherein the silylhydride functional siloxane is sequentially contacted with the aryl olefin and then with the alkyl olefin or simultaneously contacted with the aryl olefin and the alkyl olefin.

**7.** The process of claim 1, wherein, for given total charges of the silylhydride functional silicone fluid, alkyl olefin, aryl olefin and a catalyst, at least a portion of the silylhydride functional silicone fluid charge and a portion of the alkyl olefin or aryl olefin charge are mixed in a reaction vessel and heated, a portion of the hydrosilylation catalyst charge is then added to the heated contents of the reaction vessel and streams of the remaining portions of the silylhydride functional silicone fluid alkyl olefin, aryl olefin and catalyst charges are then fed into the reaction vessel at rates selected to maintain the temperature of the contents of the reaction vessel within a desired range.

**8.** The process of claim 1, further comprising stripping the silicone fluid to remove volatile impurities and/or filtering the silicone fluid to remove solid impurities.

**9.** A silicone fluid, comprising an organopolysiloxane polymer exhibiting a viscosity of from about 5 centiStokes to about 100,000 centiStokes, comprising one or more alkyl substituent groups or aryl substituent groups and comprising less than 100 parts per million aromatic hydrocarbon solvent.

**10.** A process according to claim 1 for making a silylhydride-functional silicone fluid comprises contacting one or more polymer or copolymers according to structural formula:

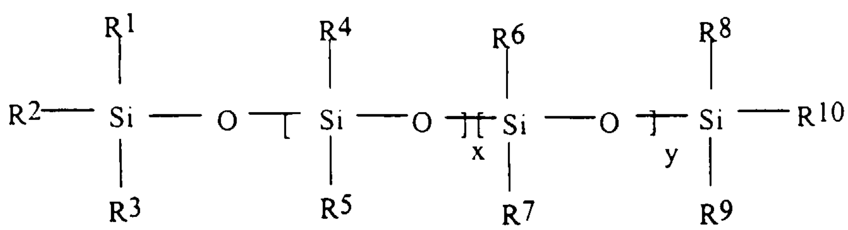

wherein $R^1$, $R^2$, $R^3$, $R^8$, $R^7$, $R^9$ and $R^{10}$ are each methyl, $R^6$ is H, x is 0 and y is selected such that the polymer exhibits a viscosity of from 10 centiStokes to 100 centiStokes with one or more compounds selected from styrene, α-methyl styrene, hexene, heptene and octene under hydrosilylation conditions in the substantial absence of hydrocarbon solvent.

European Patent Office

# EUROPEAN SEARCH REPORT

Application Number
EP 00 30 9988

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 968 470 A (ICI) 2 July 1964 (1964-07-02) * examples 3,4 * | 1-4,6,8, 9 | C08G77/04 C08G77/38 |
| X | US 3 440 263 A (BRENNAN JAMES A) 22 April 1969 (1969-04-22) * column 2, line 10 - column 3, line 59; claims 1,13; example 1 * | 1-10 | |
| X | US 3 450 736 A (MONTEREY FRANCIS G A DE) 17 June 1969 (1969-06-17) * column 1, line 50 - column 4, line 21; claims 1-6; example 1 * | 1-10 | |
| X | US 4 519 927 A (SEIKI HIROMICHI) 28 May 1985 (1985-05-28) * examples 1,9 * | 9 | |
| X | US 5 539 137 A (LEWIS LARRY N ET AL) 23 July 1996 (1996-07-23) * example 9 * | 9 | |

TECHNICAL FIELDS SEARCHED (Int.Cl.7)
C08G

The present search report has been drawn up for all claims

| Place of search | Date of completion of the search | Examiner |
|---|---|---|
| MUNICH | 26 February 2001 | Hoffmann, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 30 9988

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2001

| Patent document cited in search report | Publication date | Patent family member(s) | Publication date |
|---|---|---|---|
| GB 968470 A | | FR 1359431 A | 07-08-1964 |
| US 3440263 A | 22-04-1969 | US 3445390 A | 20-05-1969 |
| US 3450736 A | 17-06-1969 | NONE | |
| US 4519927 A | 28-05-1985 | JP 1699025 C | 28-09-1992 |
| | | JP 3059956 B | 12-09-1991 |
| | | JP 59129294 A | 25-07-1984 |
| | | DE 3400769 A | 19-07-1984 |
| | | FR 2539426 A | 20-07-1984 |
| | | GB 2134922 A,B | 22-08-1984 |
| US 5539137 A | 23-07-1996 | DE 19622142 A | 12-12-1996 |
| | | FR 2735135 A | 13-12-1996 |
| | | GB 2301828 A,B | 18-12-1996 |
| | | JP 9136960 A | 27-05-1997 |

EPO FORM P0459

For more details about this annex : see Official Journal of the European Patent Office, No. 12/82